(19) Europäisches Patentamt
European Patent Office
Office européen des brevets

(11) Veröffentlichungsnummer: **0 181 293**
**B1**

# (12) EUROPÄISCHE PATENTSCHRIFT

(45) Veröffentlichungstag der Patentschrift: **24.10.90**

(51) Int. Cl.$^5$: **D 06 P 3/24,** D 06 P 1/38

(21) Anmeldenummer: **85810511.7**

(22) Anmeldetag: **04.11.85**

## (54) Verfahren zum Färben von synthetischen Polyamidmaterialien mit faserreaktiven Anthrachinonfarbstoffen.

(30) Priorität: **08.11.84 US 669548**

(43) Veröffentlichungstag der Anmeldung:
**14.05.86 Patentblatt 86/20**

(45) Bekanntmachung des Hinweises auf die Patenterteilung:
**24.10.90 Patentblatt 90/43**

(84) Benannte Vertragsstaaten:
**CH DE FR GB IT LI NL**

(56) Entgegenhaltungen:
**EP-A-0 089 004**
**EP-A-0 099 859**
**EP-A-0 135 198**
**EP-A-0 162 811**
**EP-A-0 181 292**
**CH-A- 425 713**
**DE-A-2 128 834**
**DE-B-1 016 230**
**DE-B-2 834 997**
**GB-A-1 009 955**
**US-A-3 538 128**

(73) Patentinhaber: **CIBA-GEIGY AG**
**Klybeckstrasse 141**
**CH-4002 Basel (CH)**

(72) Erfinder: **Bowles, James Benjamin**
**438 East Radiance Drive**
**Greensboro, N.C. 27403 (US)**
Erfinder: **White, Marshall, Jr. Dr.**
**4110 Ponce De Leon Drive**
**High Point, N.C. 27260 (US)**
Erfinder: **Püntener, Alois, Dr.**
**Pulverweg 13**
**CH-4310 Rheinfelden (CH)**
Erfinder: **Adam, Jean-Marie, Dr.**
**Rue de Village Neuf 60 D**
**F-68300 Rosenau (FR)**
Erfinder: **Loew, Peter, Dr.**
**Concordiastrasse 23**
**CH-4142 Münchenstein (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 181 293 B1

**Beschreibung**

Die vorliegende Erfindung betrifft ein Verfahren zum kontinuierlichen Färben von synthetischen Polyamidmaterialien in ozonechten Farbtönen mit faserreaktiven, sulfogruppenhaltigen Anthrachinonfarbstoffen der nachstehenden Formeln (1) und (2) sowie Mischungen von Anthrachinonfarbstoffen mit ein oder zwei faserreaktiven Gruppen und ein oder zwei Sulfonsäuregruppen.

Bei Färbungen auf synthetischen Polyamidmaterialien, welche mit Anthrachinonfarbstoffen gefärbt sind, wird immer wieder eine den heutigen Anforderungen nicht genügende Ozonechtheit der Färbungen festgestellt.

Die der vorliegenden Erfindung zugrundeliegende Aufgabe war es, ein Verfahren zum Färben von synthetischen Polyamidmaterialien mit Anthrachinonfarbstoffen zu finden, welches Färbungen von sehr guter Ozonechtheit ergibt.

Es wurde nun gefunden, dass man diese Aufgabe erfindungsgemäss durch das nachfolgend beschriebene Verfahren lösen kann. Die so erhaltenen Färbungen genügen den gestellten Anforderungen bezüglich Ozonechtheit.

Gegenstand der vorliegenden Erfindung ist somit ein Verfahren zur Herstellung ozonechter Färbungen auf synthetischen Polyamidfasermaterialien aus wässriger Flotte mit Anthrachinonfarbstoffen, welches dadurch gekennzeichnet ist, dass man kontinuierlich färbt und dass man einen Anthrachinonfarbstoff der Formel

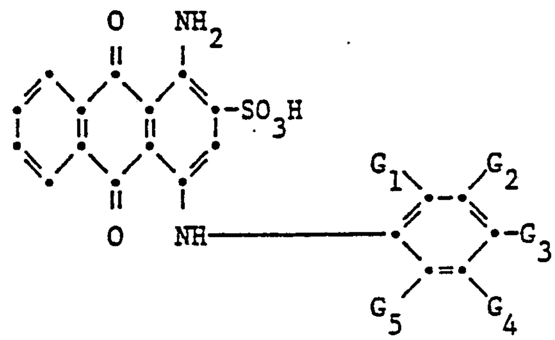

(1)

verwendet, worin $G_1$, $G_3$ and $G_5$ Methyl, $G_4$ α-Chlor- oder α-Bromacryloylaminomethyl, α,β-Dibrompropionylaminomethyl, β-(β'-Sulfatoäthylsulfonyl)-propionylaminomethyl, α,β-Dibrompropionylamino oder $-CH(COOH)-NH-CO-CHBr-CH_2Br$ und $G_2$ Wasserstoff, Sulfo oder $-CH(COOH)-NH-CO-CHBr-CH_2Br$ ist, oder worin $G_1$, $G_2$, $G_3$ und $G_5$ Wasserstoff und $G_4$ α,β-Dibrompropionylamino, Vinylsulfonyl, 2-Methoxy-4-fluor-s-triazinylamino oder 2-Aethylamino-4-fluor-s-triazinylamino ist, oder worin $G_1$, $G_2$, $G_4$ und $G_5$ Wasserstoff und $G_3$ α,β-Dibrompropionylamino, 2,6-Difluor-5-chlorpyrimidin-4-ylamino oder 2-Chlor-4-amino oder 4-N,N-Dimethylamino-s-triazinylamino ist, oder worin $G_1$ oder $G_2$ Sulfo, $G_3$ N-Methyl-N-[3-(β-Chloräthylsulfonylbenzoyl]-amino und $G_2$ oder $G_1$ und $G_4$ und $G_5$ Wasserstoff ist oder einen Anthrachinonfarbstoff der Formel

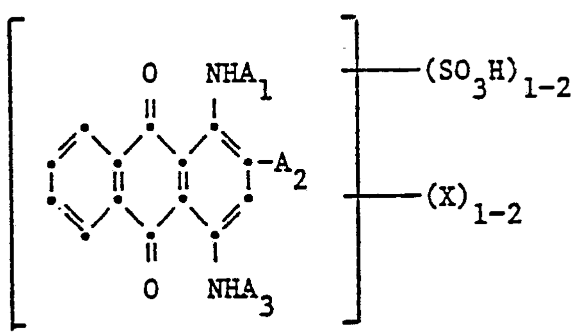

(2)

worin $A_2$ Wasserstoff ist und $A_1$ und $A_3$ zusammen mit X je den 4-α-Bromacryloylamino-3-sulfophenylrest oder den im Phenylring durch Sulfo und Chloracetylaminomethyl substituierten Phenyl-sek.-butylrest bedeuten, verwendet.

Mit dem erfindungsgemässen Verfahren werden Färbungen auf synthetischen Polyamidfasermaterialien von sehr guter Ozonechtheit erhalten.

Eine besonders wichtige Ausführungsform des erfindungsgemässen Verfahrens ist dadurch gekennzeichnet, dass man einen Farbstoff der Formel (1) verwendet, worin $G_1$, $G_2$, $G_4$ und $G_5$ Wasserstoff und $G_3$ α,β-Dibrompropionylamino ist, oder worin $G_1$, $G_3$, $G_4$ und $G_5$ Wasserstoff und $G_2$ Vinylsulfonyl, 2-Methoxy-4-fluor-s-triazinylamino oder 2-Aethylamino-4-fluor-s-triazinylamino ist, oder worin $G_1$, $G_3$ und $G_5$ Methyl, $G_2$ Wasserstoff oder $-CH(COOH)-NH-CO-CHBr-CH_2Br$ und $G_4$ α,β-

Dibrompropionylaminomethyl oder —CH(COOH)—NH—CO—CHBr—$CH_2Br$ ist, oder worin $G_1$, $G_3$ und $G_5$ Methyl, $G_2$ α,β-Dibrompropionylamino und $G_4$ Sulfo ist.

Ein weiterer Gegenstand der vorliegenden Erfindung ist ein Verfahren zur Herstellung ozonechter Färbungen auf synthetischen Polyamidfasermaterialien aus wässriger Flotte mit Mischungen von Anthrachinonfarbstoffen, welches dadurch gekennzeichnet ist, dass man kontinuierlich färbt, und dass man Mischungen von Anthrachinonfarbstoffen mit ein oder zwei faserreaktiven Gruppen und ein oder zwei Sulfonsäuregruppen verwendet.

Mit dem erfindungsgemässen Verfahren werden mit den erfindungsgemässen Farbstoffmischungen Färbungen auf synthetischen Polyamidfasermaterialien von sehr guter Ozonechtheit erhalten.

Als Anthrachinonfarbstoffe kommen in den Mischungen ausgewählte z.B. im Colour Index als Reactive Blue angegebene Anthrachinonfarbstoffe mit ein oder zwei faserreaktiven Gruppen und ein oder zwei Sulfonsäuregruppen in Betracht.

Insbesondere verwendet man eine Mischung aus zwei Anthrachinonfarbstoffen, deren Einzelkomponenten je ein oder zwei faserreaktive Gruppen und ein oder zwei Sulfonsäuregruppen enthalten.

Vorzugsweise entspricht jede Einzelkomponente der Mischung einem Farbstoff der Formel

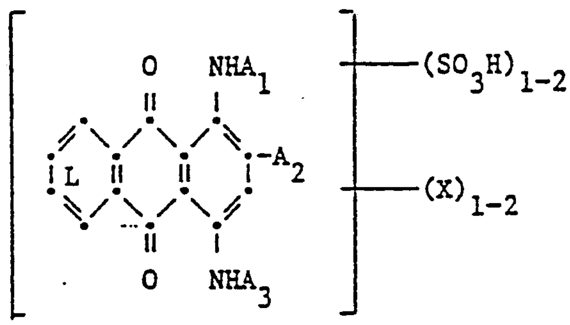

(3)

worin der Ring L durch Hydroxy, Halogen oder Sulfo substituiert sein kann, $A_1$ Wasserstoff, $C_{1-8}$-Alkyl, $C_{5-7}$-Cycloalkyl, Phenyl oder Phenyl-$C_{1-8}$-alkyl, $A_2$ Wasserstoff oder Halogen wie Chlor und Brom sowie vorzugsweise eine Sulfonsäuregruppe, $A_3$ gegebenenfalls durch $C_{1-4}$-Alkyl, $C_{1-4}$-Alkoxy, Phenoxy, $C_{1-4}$-Alkylphenoxy oder Naphthoxy substituiertes Phenyl oder Phenyl-$C_{1-8}$-alkyl und X einen direkt oder über ein Brückenglied gebundenen faserreaktiven Rest bedeuten.

Als Alkylrest kommt für $A_1$ in Formel (3) ein geradkettiger oder verzweigter Alkylrest in Betracht, wie beispielsweise Methyl, Aethyl, Propyl, Isopropyl, Butyl, sek.-Butyl, Isobutyl, tert.-Butyl, Pentyl, Hexyl, Heptyl und Octyl.

Als $C_{5-7}$-Cycloalkylrest kommt für $A_1$ beispielsweise der cyclohexylrest oder ein durch Alkyl, wie Methyl, substituierter Cyclohexylrest in Betracht.

Als Phenylrest kommt für $A_1$ in Formel (3) ein gegebenenfalls durch $C_{1-4}$-Alkyl, $C_{1-4}$-Alkoxy oder Halogen substituierter Phenylrest in Betracht, der durch eine Sulfonsäuregruppe und einen faserreaktiven Rest weitersubstituiert sein kann; vorzugsweise ist der Phenylrest durch eine Sulfonsäuregruppe und einen faserreaktiven Rest substituiert.

Als Phenyl-$C_{1-8}$-alkylrest kommt für $A_1$ und $A_3$ in Formel (3) unabhängig voneinander z.B. der Benzyl-, Phenäthyl, Phenbutyl oder Phenyl-sek.-butyl-Rest in Betracht, der vorzugsweise durch eine Sulfonsäuregruppe und mindestens einen faserreaktiven Rest substituiert ist.

Bedeutet $A_3$ in Formel (3) einen Phenylrest, so kommt ein durch $C_{1-4}$-Alkyl, insbesondere Methyl, $C_{1-4}$-Alkoxy, insbesondere Methoxy, Phenoxy, $C_{1-4}$-Alkylphenoxy, wie Methylphenoxy, oder Naphthoxy substituierter Phenylrest in Betracht, der gegebenenfalls durch eine Sulfonsäuregruppe und vorzugsweise ein oder zwei faserreaktive Reste weitersubstituiert ist.

Unter faserreaktiven Resten X sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Vorzugsweise bedeutet X einen faserreaktiven Rest der aliphatischen, aromatischen oder heterocyclischen Reihe, der direkt oder über ein Brückenglied an den Rest $A_1$ und/oder $A_3$ gebunden ist.

Vorzugsweise ist X direkt oder über eine gegebenenfalls monoalkylierte Aminogruppe wie z.B. —NH—, —$N(CH_3)$—, —$N(C_2H_5)$— oder —$N(C_3H_7)$— oder über ein eine Aminogruppe enthaltendes Brückenglied an den Rest $A_1$ und/oder $A_3$ gebunden.

Als faserreaktive Reste X in Formel (3) kommen z.B. die folgenden aliphatischen und aromatischen Reste in Betracht:

Vinylsulfonyl-, β-Chloräthylsulfonyl-, β-Sulfatoäthylsulfonyl-, β-Acetoxy-äthylsulfonyl-, Phosphonooxyäthylsulfonyl-, β-Thiosulfatoäthylsulfonyl, N-Methyl-N-(β-sulfatoäthyl-sulfonyl)-amino, Acryloyl, Mono-, Di- oder Trichloracryloyl wie —CO—CCl=$CH_2$, —CO—CH=CH—Cl, —CO—CCl=CH—$CH_3$; Mono-, Di- oder Tribromacryloyl wie —CO—CBr=$CH_2$, —CO—CH=CH—Br, —CO—CBr=CH—$CH_3$; sowie

—CO—CCl=CH—COOH, —CO—CH=CCl—COOH, —CO—CBr=CH—COOH, —CO—CH=CBr—COOH; —CO—CCl=CCl—COOH, —CO—CBr=CBr—COOH; Vorstufen des Acryloyl-Restes und der Derivate des Acryloyl-Restes wie β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3,-Tetrafluorcyclobutan-carbonyl-1-oder sulfonyl-1-, β-(2,2,3,3-Tetrafluorcyclobutyl-1)-acryloyl, α- oder β-Alkyl- oder Arylsulfonyl-acryloyl-Gruppe wie α- oder β-Methylsulfonylacryloyl, Propiolyl, Chloracetyl, Bromacetyl, 4-(β-Chloräthyl-sulfonyl)-butyryl, 4-Vinylsulfonyl-butyryl, 5-(β-Chloräthyl-sulfonyl)-valeryl, 5-Vinylsulfonyl-valeryl, 6-(β-Chloräthyl-sulfonyl)-caproyl, 6-Vinylsulfonyl-carproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind faserreaktive Reste X der heterocyclischen Reihe zu nennen, wie z.B. 2,4-Dichlortriazinyl-6-, Mono- Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono-, -di- oder trichlormethyl- oder 5-methylsulfonylpyrimidinyl-6-, 2,5-Dichlor-4-methylsulfonyl-pyrimidinyl-6-, 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methylsulfonyl-4-pyrimidinyl-, 2-Fluor-5-carbonamido-5-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; 2,4-Bis-methylsulfonyl-pyrimidinyl-4-, 2,5-Bis-methylsulfonyl-5-chlor-pyrimidinyl-4-, 2-Methylsulfonyl-pyrimidinyl-4-, 2-Phenylsulfonyl-pyrimidinyl-4-, 2-Methylsulfonyl-5-chlor-6-methylpyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-methyl-pyrimidinyl-4-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Aethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2,4-Dichlorpyrimidin-6-carbonyl oder 6-sulfonyl, 2,4-Dichlorpyrimidin-5-carbonyl- oder 5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder 5-sulfonyl, 2-Methylsulfonyl-6-chlorpyrimidin-4- und 5-carbonyl, 2,6-Bis-(methylsulfonyl)-pyrimidin-4- oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder carbonyl, 2,4,6-Trichlorchinazolin-7- oder -8-sulfonyl, 2- oder 3- oder 4-(4',5'-Dichlorpyridazon-6'-yl-1')-phenylsulfonyl- oder carbonyl, β-(4',5'-Dichlorpyridazinon-6'-yl-1')-propionyl, 3,6-Dichlorpyridazin-4-carbonyl- oder 4-sulfonyl, 2-Chlorbenzthiazol-5- oder 6-carbonyl- oder -5- oder -6-sulfonyl, 2-Arylsulfonyl- oder Alkylsulfonylbenzthiazol-5- oder -6-carbonyl- oder -5- oder -6-sulfonyl, wie 2-Methylsulfonyl- oder 2-Ethylsulfonylbenzthiazol-5- oder -6-sulfonyl- oder -carbonyl, 2-Phenylsulfonyl-benzthiazol-5- oder -6-sulfonyl- oder carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl- oder -sulfonyl, 2-Chlor-1-methylbenzimidazol-5- oder -6-carbonyl- oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo[2,2,2]-octan oder das 1,2-Bis-aza-bicyclo-[0,3,3]-octan quartär gebunden enthalten,

2-Pyridinium-4-phenylamino- oder -4-(o-, m- oder p-sulfophenyl)-amino-triazinyl-6- sowie entsprechende 2-Oniumtriazinyl-6-Reste, die in 4-Stellung durch Alkylamino-, wie Methylamino, Aethylamino- oder β-Hydroxy-äthylamino-, oder Alkoxy-, wie Methoxy- oder Aethoxy-, oder Aryloxy-, wie Phenoxy-, oder Sulfophenoxy-Gruppen substituiert sind.

Ferner interessante faserreaktive Reste sind Chlor- oder Fluor-1,3,5-triazinreste der Formel

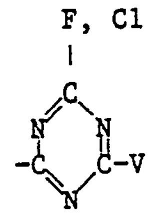

wobei als Substituenten V am Triazinring insbesondere zu nennen sind. Halogen, wie z.B. Chlor oder Fluor, $C_{1-8}$-Alkoxy, wie z.B. Methoxy, Cyclohexyloxy, Phenoxy, $C_{1-6}$-Alkylmercapto, wie Methylmercapto, Phenylmercapto, —$NH_2$, Alkylamino-, N,N-Dialkylamino-, Cycloalkylamino-, N,N-Dicycloalkylamino-, Aralkylamino-, Arylaminogruppen gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, und Aminogruppen, worin das Aminostickstoffatom Glied eines N-heterocyclischen Ringes ist, der gegebenenfalls weitere Heteroatome enthält, sowie Hydrazino und Semicarbazido. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt: —$NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino, Piperazino, Hydrazino und Semicarbazido.

Ganz besonders bevorzugt verwendet man in dem erfindungsgemässen Verfahren eine Mischung, worin jede Einzelkomponente einem Farbstoff der Formel

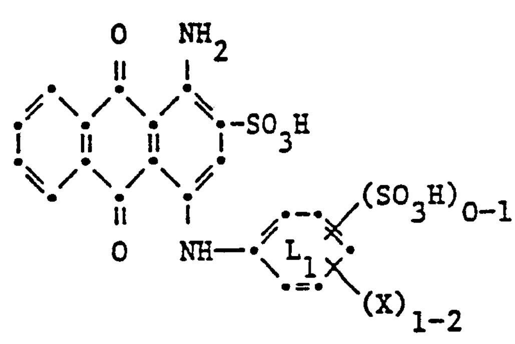

(4)

worin X die unter Formel (3) angegebene Bedueutung hat und der Phenylring $L_1$ gegebenenfalls durch $C_{1-4}$-Alkyl, $C_{1-4}$-Alkoxy oder Phenoxy ein-, zwei-, drei- oder vierfach substituiert ist, oder einem Farbstoff der Formel

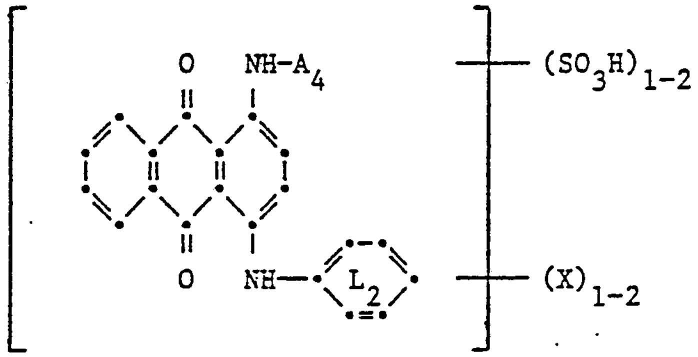

(5)

worin $A_4$ einen $C_{1-6}$-Alkyl- oder $C_{5-7}$-Cycloalkylrest bedeutet, X die unter Formel (4) angegebene Bedeutung hat und der Phenylring $L_2$ gegebenenfalls durch $C_{1-4}$-Alkyl, $C_{1-4}$-Alkoxy, Phenoxy oder $C_{1-4}$-Alkylphenoxy ein-, zwei- oder dreifach substituiert ist, oder einem Farbstoff der Formel

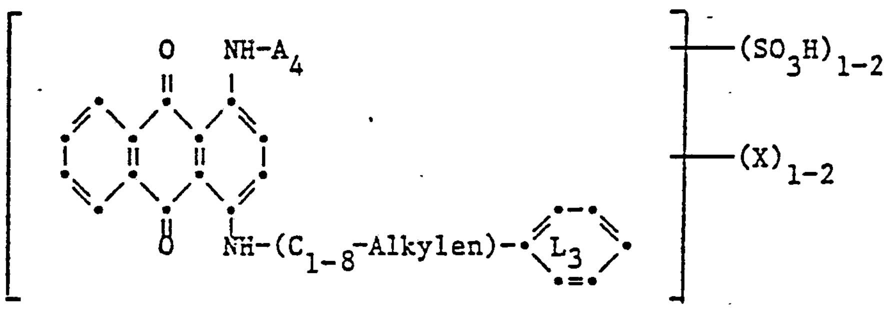

(6)

worin $A_4$ die unter Formel (5) angegebene Bedeutung hat, X die unter Formel (4) angegebene Bedeutung hat und der Phenylring $L_3$ gegebenenfalls durch $C_{1-4}$-Alkyl oder $C_{1-4}$-Alkoxy ein- oder zweifach substituiert ist, oder einem Farbstoff der Formel

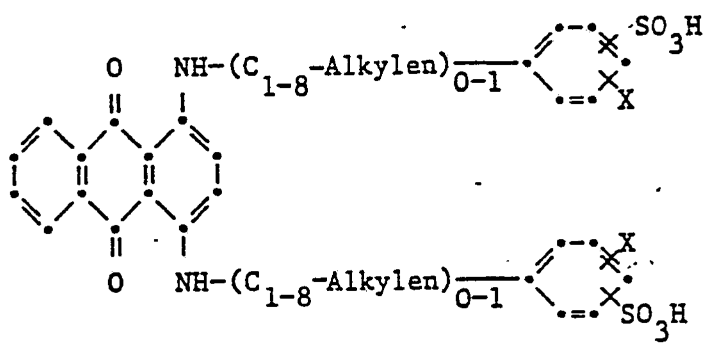

(7)

worin X die unter Formel (4) angegebene Bedeutung hat, entspricht, d.h. Mischungen, worin eine Komponente einem Farbstoff der Formel (4), (5), (6) oder (7) entspricht, und die andere Komponente einem Farbstoff der Formel (4), (5), (6) oder (7) entspricht. Insbesondere verwendet man eine Mischung aus zwei Anthrachinonfarbstoffen, worin eine Komponente einem Farbstoff der Formel (4) entspricht und die andere Komponente einem Farbstoff der Formel (4) oder (5) entspricht.

Vorzugsweise verwendet man erfindungsgemässe Anthrachinonfarbstoffmischungen, worin

a) X ein gegebenenfalls über ein Brückenglied der Formel

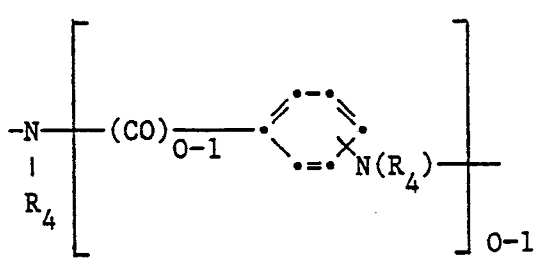

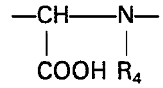

oder 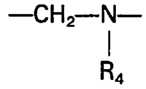

gebundener faserreaktiver Rest der aliphatischen, aromatischen oder heterocyclischen Reihe ist, und $R_4$ Wasserstoff oder $C_{1-4}$-Alkyl bedeutet;

b) X einen über —NH—,

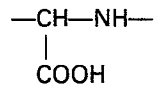

oder —$CH_2$—NH— gebundener Chloracetyl-, Bromacetyl-, Acryloyl-, α,β-Dichlorpropionyl-, α,β-Dibrompropionyl-, α-Bromacryloyl- oder α-Chloracryloylrest oder einem Rest der Formeln

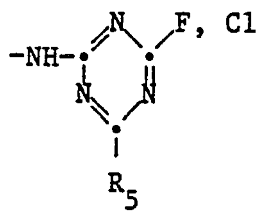

oder

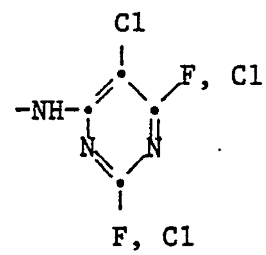

worin $R_5$ $C_{1-6}$-Alkoxy, $C_{1-6}$-Alkylmercapto oder ein Rest der Formel

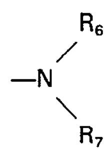

ist, wobei $R_6$ und $R_7$ unabhängig voneinander Wasserstoff, $C_{1-6}$-Alkyl oder gegebenenfalls substituiertes Phenyl oder Naphthyl bedeuten, oder einen Vinylsulfonyl-, β-Sulfatoäthylsulfonyl-, β-Acetoxyäthylsulfonyl-, β-Chloräthylsulfonyl oder β-(β'-Sulfatoäthylsulfonyl)-propionylaminomethyl-Rest bedeutet.

Eine wichtige Mischung von Anthrachinonfarbstoffen, die in dem erfindungsgemässen Verfahren verwendet werden kann, ist dadurch gekennzeichnet, dass eine Komponente einem Farbstoff der Formel

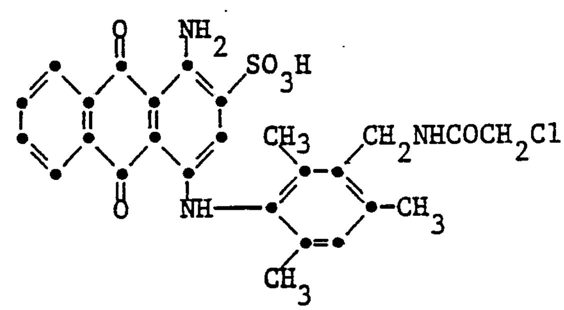

(8)

oder einem Farbstoff der Formel

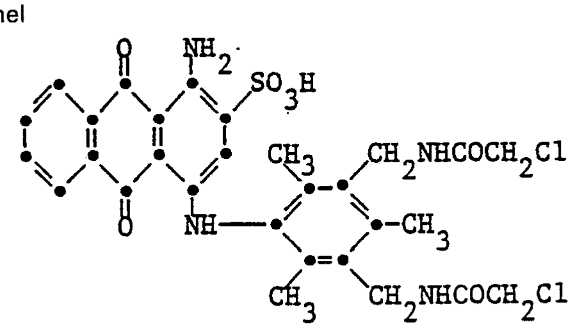

(9)

oder einem Farbstoff der Formel (5) entspricht, worin $A_4$ Cyclohexyl, $L_2$ durch p-Methylphenoxy substituiert ist und X Chloracetylaminomethyl ist und der Farbstoff der Formel (5) nur eine Sulfogruppe enthält, und die andere Komponente einem Farbstoff der Formel (1) entspricht, worin $G_1$, $G_2$, $G_4$ und $G_5$ Wasserstoff, und $G_3$ α,β-Dibrompropionylamino ist, oder worin $G_1$, $G_3$, $G_4$ und $G_5$ Wasserstoff und $G_2$ Vinylsulfonyl, Chloracetylamino, 2-Methoxy-4-fluor-s-triazinylamino oder 2-Aethylamino-4-fluor-s-triazinylamino ist, oder worin $G_1$ Methyl, $G_2$ 2,6-Difluor-5-chlorpyrimidinylamino, $G_3$ und $G_5$ Wasserstoff und $G_4$ Sulfo ist, oder worin $G_1$ Sulfo, $G_2$, $G_4$ und $G_5$ Wasserstoff und $G_3$ α-Bromacryloylamino ist, oder worin $G_1$, $G_3$ und $G_5$ Methyl, $G_2$ α,β-Dibrompropionylaminomethyl, $-CH(COOH)-NH-CO-CHBr-CH_2Br$ oder α,β-Dibrompropionylamino und $G_4$ Wasserstoff, $-CH(COOH)-NH-CO-CHBr-CH_2Br$ oder Sulfo ist, oder worin $G_1$ Methoxy, $G_2$, $G_3$ und $G_4$ Wasserstoff und $G_4$ β-Sulfatoäthylsulfonyl ist.

Eine besonders wichtige Mischung Anthrachinonfarbstoffen, die in dem erfindungsgemässen Verfahren verwendet werden kann, ist dadurch gekennzeichnet, dass eine Komponente dem Farbstoff der Formel (8) oder (9) entspricht und die andere Komponente dem Farbstoff der Formel (5) entspricht, worin $A_4$ Cyclohexyl, $L_2$ durch p-Methylphenoxy substituiert ist und X Chloracetylaminomethyl ist und der Farbstoff der Formel (5) nur eine Sulfogruppe enthält.

Eine weitere besonders wichtige Mischung von Anthrachinonfarbstoffen, die in dem erfindungsgemässen Verfahren verwendet werden kann, ist dadurch gekennzeichnet, dass eine Komponente dem Farbstoff der Formel (8) oder (9) entspricht, und die andere Komponente dem Farbstoff der Formel (1) entspricht, worin $G_1$, $G_2$, $G_4$ und $G_5$ Wasserstoff und $G_3$ Chloracetylamino ist.

Eine ganz besonders wichtige Mischung von Anthrachinonfarbstoffen die in dem erfindungsgemässen Verfahren verwendet werden kann, ist dadurch gekennzeichnet, dass eine Komponente dem Farbstoff der Formel (9) entspricht und die andere Komponente dem Farbstoff der Formel

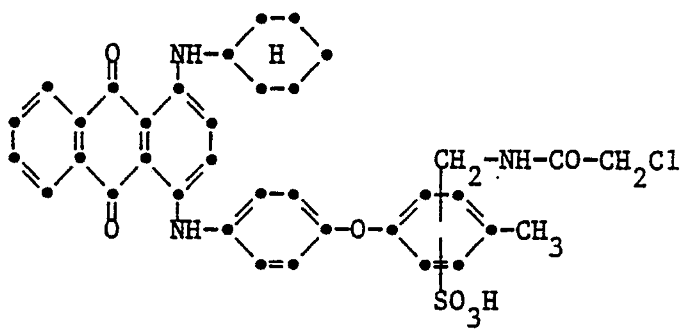

(10)

entspricht. Vorzugsweise ist das Gewichtsverhältnis der Farbstoffe der Formeln (9) zu (10) 90:10 bis 70:30, insbesondere 80:20.

Im allgemeinen kann das Gewichtsverhältnis der Anthrachinonfarbstoffe in den erfindungsgemäss verwendeten Mischungen in weiten Grenzen schwanken. Ein Gewichtsverhältnis von 90:10 bis 10:90 und insbesondere von 70:30 bis 30:70 hat sich als vorteilhaft erwiesen.

Die in dem erfindungsgemässen Verfahren verwendeten Anthrachinonfarbstoffe der Formel (I) oder die Komponenten der Mischungen enthalten vorzugsweise nur eine einzige Sulfonsäuregruppe.

Die in dem erfindungsgemässen Verfahren verwendeten Anthrachinonfarbstoffe sind an sich bekannt oder können in Analogie zu bekannten Verfahren hergestellt werden. So können beispiele die Farbstoffe der Formel (3) gemäss den Angaben der deutschen Offenlegungsschrift 23 05 206, der schweizerischen Patentschrift 466 470 und der britischen Patentschrift 903 590 hergestellt werden.

Di in dem erfindungsgemässen Verfahren verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die in dem erfindungsgemässen Verfahren verwendeten Farbstoffe enthalten in der Regel weitere Zusätze wie z.B. Kochsalz oder Dextrin.

Das erfindungsgemässe Verfahren zum Färben von synthetischen Polyamidmaterialien kann auf die üblichen Färbeverfahren angewendet werden.

Die Färbeflotten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und ölabweisende Mittel sowie wasserenthärtende Mittel und natürliche oder synthetische Verdicker, wie z.B. Alginate und Celluloseäther, enthalten.

Das erfindungsgemässe Verfahren ist besonders zum kontinuierlichen Färben geeignet.

Die in den erfindungsgemässen Verfahren verwendeten Farbstoffe zeichnen sich durch gleichmässigen Farbaufbau, gutes Aufziehverhalten und gute Echtheiten, insbesondere gute Ozonechtheit aus.

Die besonders hervorzuhebende Ozonechtheit der mit dem erfindungsgemässen Verfahren erhältlichen Färbungen auf synthetischen Polyamidmaterialien wird gemäss den Prüfmethoden der American Association of Textile Chemists and Colorists Test-Method 109—1975 bzw. 129—175 bestimmt.

Das erfindungsgemässe Verfahren eignet sich zum Färben von synthetischen Polyamidmaterialien wie z.B. Nylon oder Perlon, insbesondere Polyamid 6.6- und vorzugsweise Polyamid 6-Materialien.

Das genannte Textilmaterial kann dabei in den verschiedensten Verarbeitungsformen vorliegen, wie z.B. als Faser, Garn, Gewebe oder Gewirke und insbesondere in Form von Teppichen.

Eine besonders interessante Ausführungsform des erfindungsgemässen Verfahtens ist dadurch gekennzeichnet, dass man synthetische Polyamid-Teppiche kontinuierlich mit Anthrachinonfarbstoffen der Formel (1) oder (2) oder Mischungen von Anthrachinonfarbstoffen der Formel (3), insbesondere mit Anthrachinonfarbstoffen der Formeln (4) oder (1), färbt.

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die Mengen, in denen die Farbstoffe oder Mischungen in den Färbebädern verwendet werden, können je nach der gewünschten Farbtiefe in weiten Grenzen schwanken, im allgemeinen haben sich Mengen von 0,001 bis 6 Gewichtsprozent, bezogen auf das Färbegut, als vorteilhaft erwiesen.

Das Flottenverhältnis kann innerhalb eines weiten Bereichs gewählt werden, von 1:1 bis 1:5 für kontinuierliche Färbeverfahren und das Färben erfolgt aus wässriger Flotte, bei kontinuierlichen Färbeverfahren bei Temperaturen zwischen 60 und 98°C. Bei kontinuierlichen Verfahren wird vorzugsweise heiss foulardiert oder heiss auf die Ware aufgesprüht.

Der pH-Wert der Färbeflotte kann im Bereich von 5 bis 9 schwanken. Im allgemeinen hat sich ein pH von 6 bis 8,5 als vorteilhaft erwiesen. In dem erfindungsgemässen Verfahren kann es vorteilhaft sein, den pH während der Färbedauer zu variieren, insbesondere das Färben bei einem pH von 9 zu beginnen und während der Färbedauer auf einen Wert von 5 einzustellen.

Bei kontinuierlich Verfahren richtet sich die Färbedauer nach den verwendeten Färbeapparaten oder -maschinen.

Aus der EP—A—181 292 ist ein Verfahren zum Trichromie-Färben mit Anthrachinonfarbstoffen der vorliegenden Erfindung und speziellen Rot- und Gelb- bzw. Orange-Komponenten bekannt.

Aus der EP—A—162 811, US—A—3 538 128 und DE—B—28 34 997 sind Verfahren zum Färben mit strukturell verschiedenen faserreaktiven Anthrachinonfarbstoffen bekannt.

In der EP—A—89 004 ist ein Verfahren zum Färben von natürlichem Polyamidfasermaterial mit Mischungen faserreaktiver Anthrachinonfarbstoffe offenbart.

Die bekannten Verfahren weisen nicht alle guten Eigenschaften des erfindungsgemässen Verfahrens auf.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

In ein Färbebad, welches 500 Teile Wasser, 1 Teil $NaH_2PO_4$, 0,15 Teile $Na_2HPO_4$ und 0,02 Teile des Farbstoffes der Formel

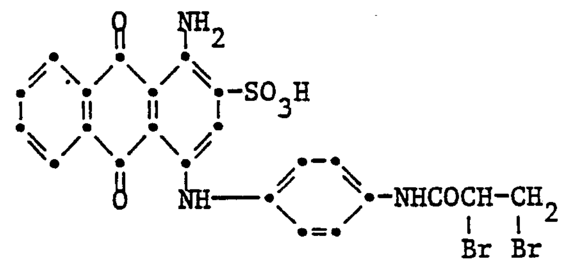

enthält, geht man bei 40° mit 10 Teilen Polyamid-6-Teppichgarn [Allied 3B—39] ein. Man steigert die Temperatur gleichmässig innerhalb von 30 Minuten biz zum Siedepunkt und färbt 1 Stunde bei dieser Temperatur. Das blau gefärbte Garn wird dann gespült und getrocknet.

Die Ozonechtheit der erhaltenen Färbung wird nach der Prüfvorschrift AATCC [American Association of Textile Chemists and Colorists] 129—1975 durchgeführt und die Farbänderung mit dem Graumassstab [SNV (Schweizerische Normenvereinigung) Norm 95805] bewertet, wobei die Note 1 die schlechteste und die Note 5 die beste Bewertung ist.

Die mit obigem Farbstoff erhaltene Färbung hat die Echtheitsnote 4.

Verwendet man anstelle des im obigen Beispiel angegebenen Farbstoffes einen der in der folgenden Tabelle in Spalte II angegebenen Farbstoffe oder eine der angegebenen Farbstoffmischungen, so erhält man ebenfalls blaue Färbungen mit den in Spalte III der Tabelle angegebenen Echtheitsnoten für die Farbänderung nach Durchführung des genannten Ozonechtheitstests.

| Beispiel I | Farbstoff der Formel II | Echtheitsnote III |
|---|---|---|
| 2 | 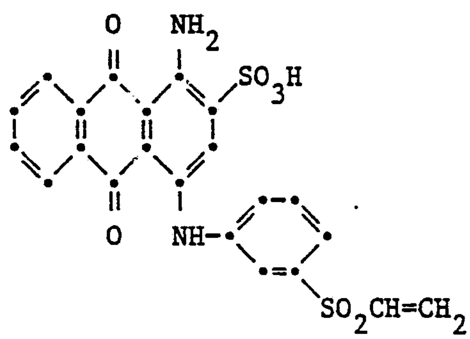 | 5 |
| 3 | 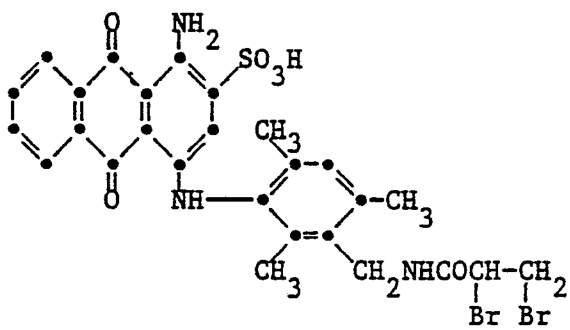 | 4 |
| 4 | 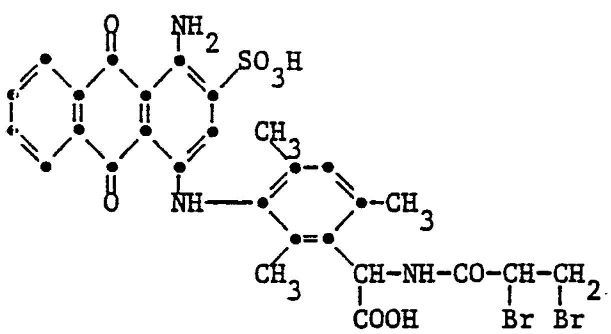 | 4 |
| 5 | 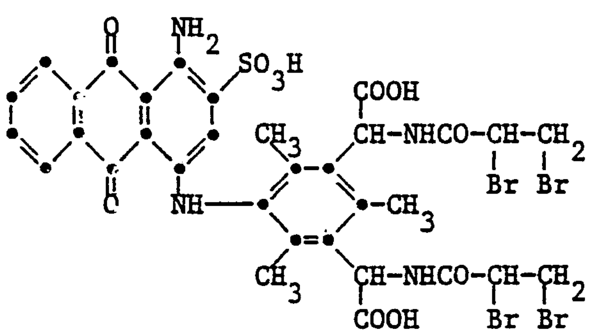 | 4 |

| Beispiel I | Farbstoff der Formel II | Echtheitsnote III |
|---|---|---|
| 6 | Mischung aus<br>80 Gewichtsteilen des Farbstoffs der Formel<br>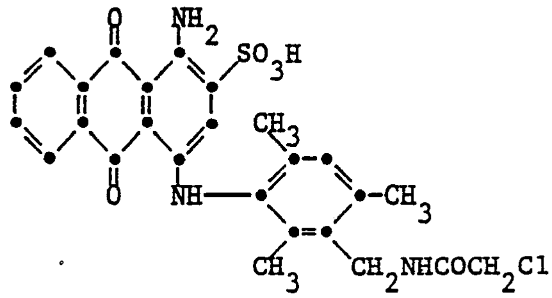<br>und 20 Gewichtsteilen des Farbstoffs der Formel<br>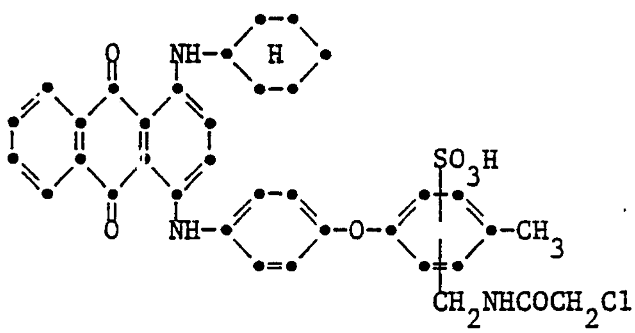 | 4 |
| 7 | Mischung aus<br>80 Gewichtsteilen des Farbstoffs der Formel<br>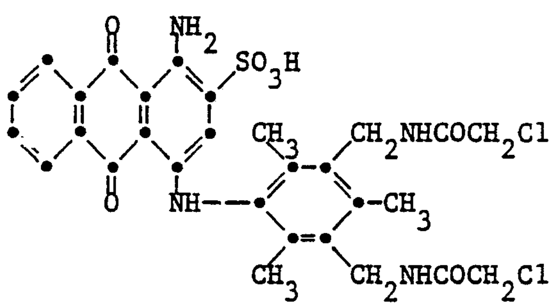<br>und 20 Gewichtsteilen des Farbstoffs der Formel<br>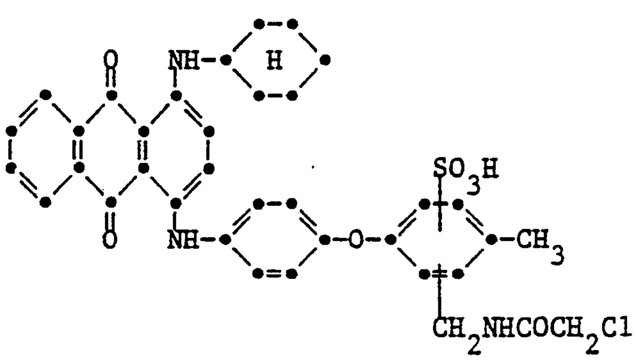 | 4 |

| Beispiel I | Farbstoff der Formel II | Echtheitsnote III |
|---|---|---|
| 8 | Mischung aus<br>90 Gewichtsteilen des Farbstoff der Formel<br>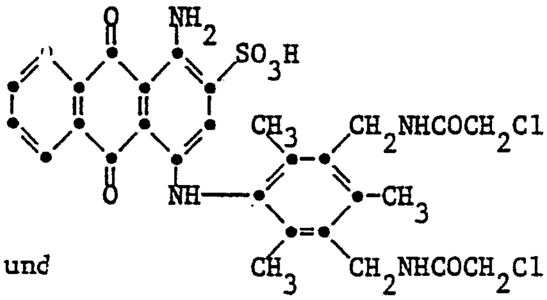<br>und<br>10 Gewichtsteilen des Farbstoffs der Formel<br>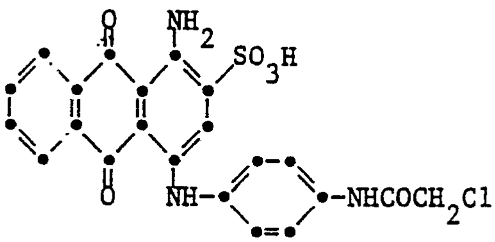 | 4 |
| 9 | Mischung aus<br>50 Gewichtsteilen des Farbstoffs der Formel<br>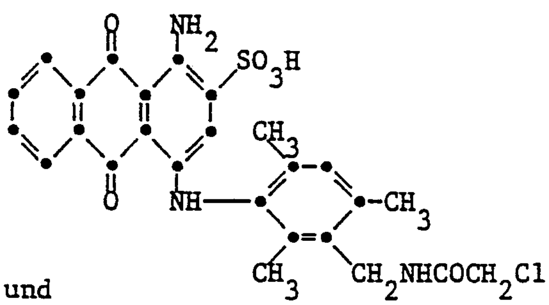<br>und<br>50 Gewichtsteilen des Farbstoffs der Formel<br>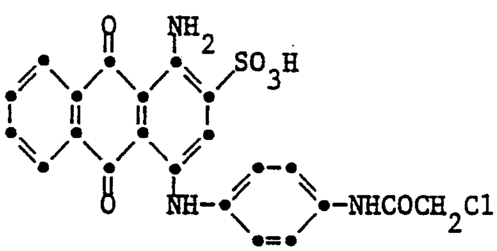 | 4 |

| Beispiel I | Farbstoff der Formel II | Echtheitsnote III |
|---|---|---|
| 10 | Mischung aus<br>80 Gewichtsteilen des Farbstoffs der Formel<br>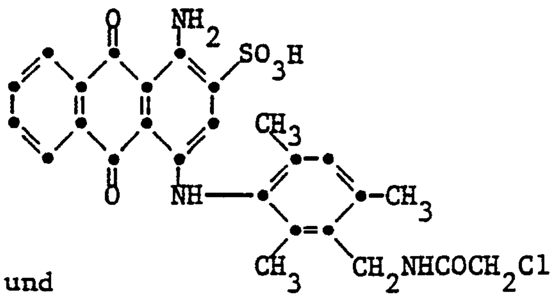<br>und<br>20 Gewichtsteilen des Farbstoffs der Formel<br>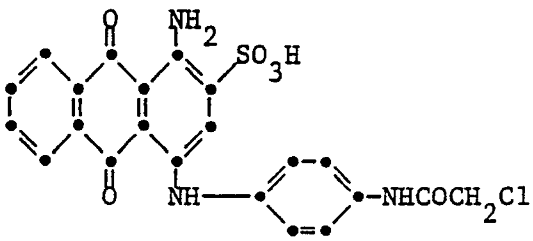 | 4 |
| 11 | 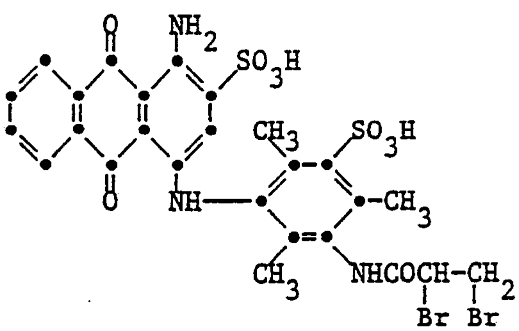 | 4 |
| 12 | 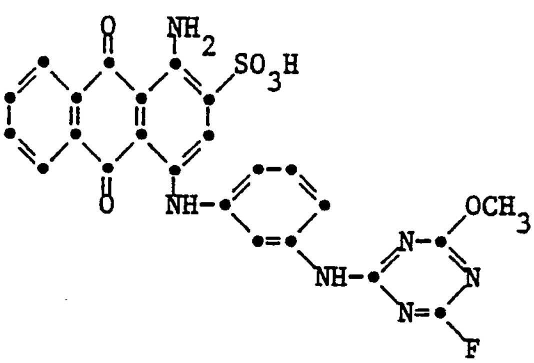 | 4 |

| Beispiel I | Farbstoff der Formel II | Echtheitsnote III |
| --- | --- | --- |
| 13 | 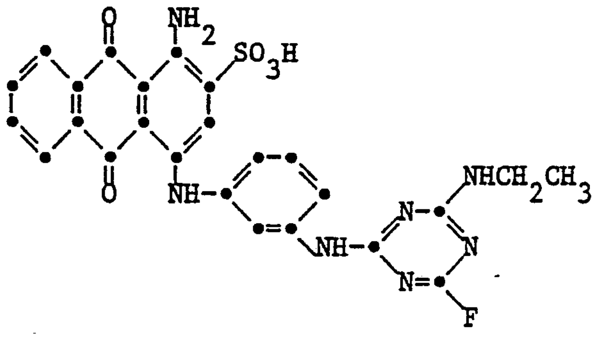 | 4 |

Vergleichsbeispiel:

Ersetzt man im Beispiel 1 die 0,02 Teile des Farbstoffs durch 0,02 Teile des nicht faserreaktiven Farbstoffes der Formel

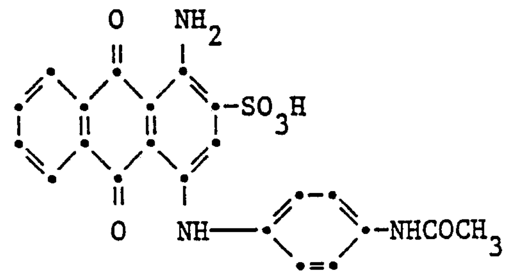

so erhält man eine blaue Färbung, die gemäss der Prüfvorschrift für die Ozonechtheit [AATTC 129—1975) eine Echtheitsnote für das Aendern der Farbe (SNV-Norm 95805) von nur 2—3 aufweist.

**Patentansprüche**

1. Verfahren zur Herstellung ozonechter Färbungen auf synthetischen Polyamidfasermaterialien aus wässriger Flotte mit Anthrachinonfarbstoffen, dadurch gekennzeichnet, dass man kontinuierlich färbt und dass man einen Anthrachinonfarbstoff der Formel

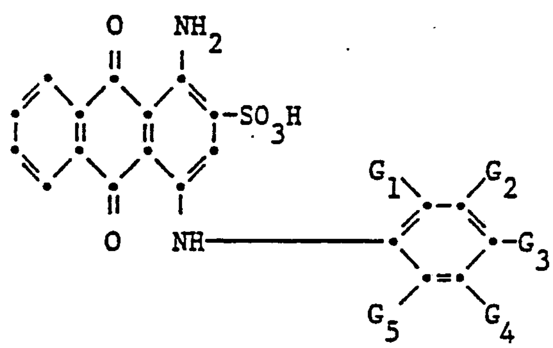

(1)

verwendet, worin $G_1$, $G_3$ und $G_5$ Methyl, $G_4$ α-Chlor- oder α-Bromacryloylaminomethyl, α,β-Dibrompropionylaminomethyl, β-(β'-Sulfatoäthylsulfonyl)-propionylaminomethyl, α,β-Dibrompropionylamino oder —CH(COOH)—NH—CO—CHBr—$CH_2$Br und $G_2$ Wasserstoff, Sulfo oder —CH(COOH)—NH—CO—CHBr—$CH_2$Br ist, oder worin $G_1$, $G_2$, $G_3$ und $G_5$ Wasserstoff und $G_4$ α,β-Dibromopropionylamino, Vinylsulfonyl, 2-Methoxy-4-fluor-s-triazinylamino oder 2-Aethylamino-4-fluor-s-triazinylamino ist, oder worin $G_1$, $G_2$, $G_4$ und $G_5$ Wasserstoff und $G_3$ α,β-Dibrompropionylamino, 2,6-Difluor-5-chlorpyrimidin-4-ylamino oder 2-Chlor-4-amino- oder 4-N,N-Dimethylamino-s-triazinylamino ist, oder worin $G_1$ oder $G_2$ Sulfo, $G_3$ N-Methyl-N-[3-(β-Chloräthylsulfonylbenzoyl]-amino und $G_2$ oder $G_1$ und $G_4$ und $G_5$ Wasserstoff ist oder einen Anthrachinonfarbstoff der Formel

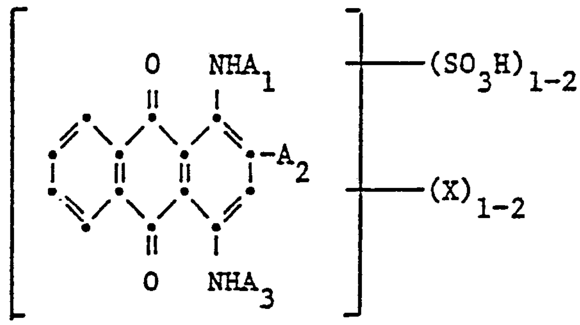

(2)

worin $A_2$ Wasserstoff ist und $A_1$ und $A_3$ zusammen mit X je den 4-α-Bromacryloylamino-3-sulfophenylrest oder den im Phenylring durch Sulfo und Chloracetylaminomethyl substituierten Phenyl-sek.-butylrest bedeuten, verwendet.

2. Verfahren gemäss Anspruch 1, dadurch gekennzeichnet, dass man einen Farbstoff der Formel (1) verwendet, worin $G_1$, $G_2$, $G_4$ und $G_5$ Wasserstoff und $G_3$ α,β-Dibrompropionylamino ist, oder worin $G_1$, $G_2$, $G_3$ und $G_5$ Wasserstoff und $G_4$ Vinylsulfonyl, 2-Methoxy- oder 2-Aethylamino-4-fluor-s-triazinylamino ist, oder worin $G_1$, $G_3$ und $G_5$ Methyl, $G_2$ Wasserstoff und $G_4$ α,β-Dibrompropionylaminomethyl oder —CH(COOH)—NH—CO—CHBr—$CH_2$Br ist, oder worin $G_1$, $G_3$ und $G_5$ Methyl und $G_2$ und $G_4$ —CH(COOH)—NH—CO—CHBr—$CH_2$Br ist, oder worin $G_1$, $G_3$ und $G_5$ Methyl, $G_2$ α,β-Dibrompropionylamino und $G_4$ Sulfo ist.

3. Verfahren zur Herstellung ozonechter Färbungen auf synthetischen Polyamidfasermaterialien aus wässriger Flotte mit Mischungen von Anthrachinonfarbstoffen, dadurch gekennzeichnet, dass man kontinuierlich färbt und dass man Mischungen von Anthrachinonfarbstoffen mit ein oder zwei faserreaktiven Gruppen und ein oder zwei Sulfonsäuregruppen verwendet.

4. Verfahren gemäss Anspruch 3, dadurch gekennzeichnet, dass man eine Mischung verwendet, worin jede Einzelkomponente einem Farbstoff der Formel

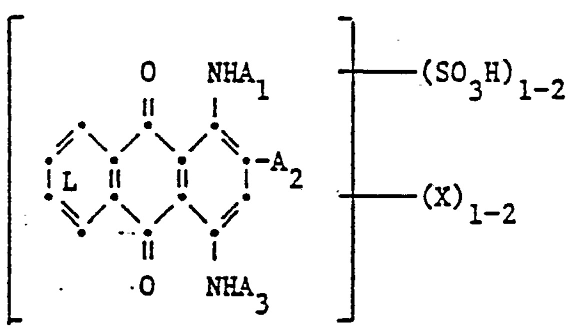

(3)

worin der Ring L durch Hydroxy, Halogen oder Sulfo substituiert sein kann, $A_1$ Wasserstoff, $C_{1-8}$-Alkyl, $C_{5-7}$-Cycloalkyl, Phenyl oder Phenyl-$C_{1-8}$-alkyl, $A_2$ Wasserstoff, Halogen oder eine Sulfonsäuregruppe, $A_3$ gegebenenfalls durch $C_{1-4}$-Alkyl, $C_{1-4}$-Alkoxy, Phenoxy, $C_{1-4}$-Alkylphenoxy oder Naphthoxy substituiertes Phenyl oder Phenyl-$C_{1-8}$-alkyl und X einen direkt oder über ein Brückenglied gebundenen faserreaktiven Rest bedeuten, entspricht.

5. Verfahren gemäss Anspruch 4, dadurch gekennzeichnet, dass man eine Mischung verwendet, worin jede Einzelkomponente einem Farbstoff der Formel

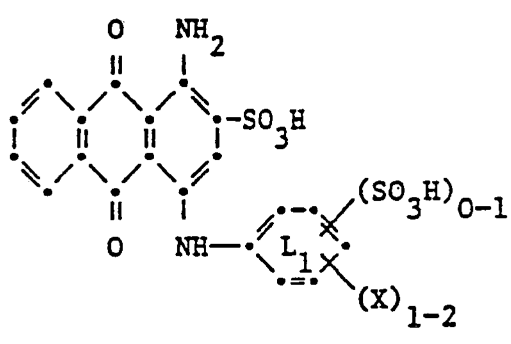

(4)

worin X die in Anspruch 4 angegebene Bedeutung hat und der Phenylring $L_1$ gegebenenfalls durch $C_{1-4}$-Alkyl, $C_{1-4}$-Alkoxy oder Phenoxy ein-, zwei-, drei- oder vierfach substituiert ist, oder einem Farbstoff der Formel

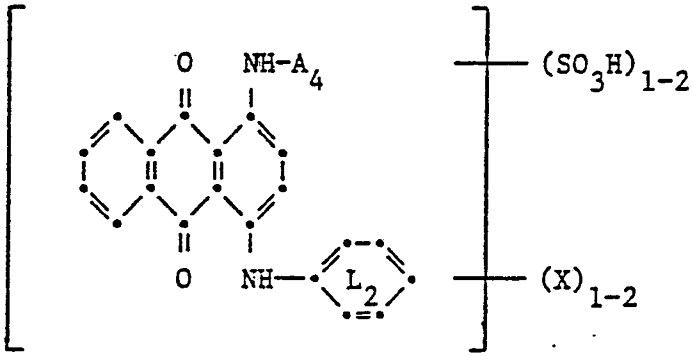

(5)

worin $A_4$ einen $C_{1-6}$-Alkyl- oder $C_{5-7}$-Cycloalkylrest bedeutet, X die in Anspruch 4 angegebene Bedeutung hat und der Phenylring $L_2$ gegebenenfalls durch $C_{1-4}$-Alkyl, $C_{1-4}$-Alkoxy, Phenoxy oder $C_{1-4}$-Alkylphenoxy ein-, zwei oder dreifach substituiert ist, oder einem Farbstoff der Formel

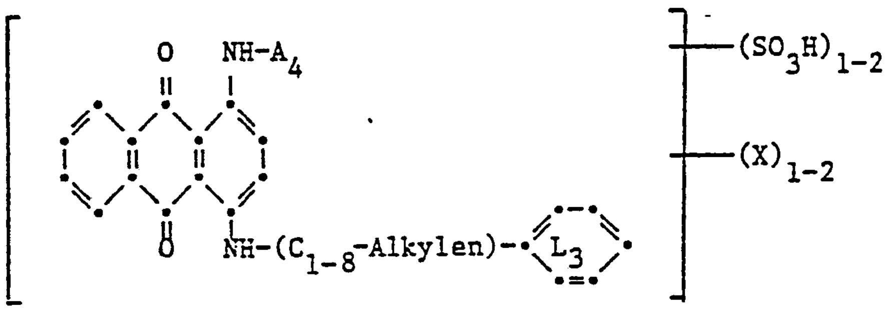

(6)

worin $A_4$ die unter Formel (5) angegebene Bedeutung hat, X die in Anspruch 4 angegebene Bedeutung hat und der Phenylring $L_3$ gegebenenfalls durch $C_{1-4}$-Alkyl oder $C_{1-4}$-Alkoxy ein- oder zweifach substituiert ist, oder einem Farbstoff der Formel

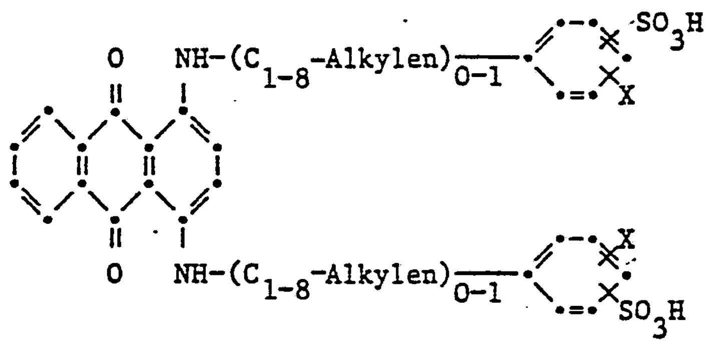

(7)

worin X in Anspruch 4 angegebene Bedeutung hat, entspricht.

6. Verfahren gemäss einem der Ansprüche 4 und 5, dadurch gekennzeichnet, dass man Anthrachinonfarbstoffe verwendet, worin X ein gegebenenfalls über ein Brückenglied der Formel

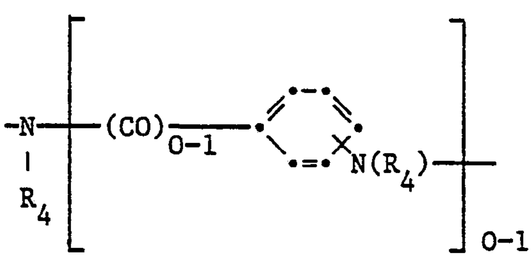

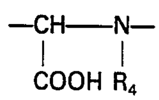 oder 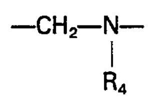

gebundener faserreaktiver Rest der aliphatischen, aromatischen oder heterocyclischen Reihe ist, und $R_4$ Wasserstoff oder $C_{1-4}$-Alkyl bedeutet.

7. Verfahren gemäss Anspruch 6, dadurch gekennzeichnet, dass man Anthrachinonfarbstoffe verwendet. worin X einen über —NH—,

—CH—
|
COOH

NH— oder $-CH_2-NH$-gebundenen Chloracetyl-, Bromacetyl-, Acryloyl-, α,β-Dichlorpropionyl-, α,β-Dibrompropionyl-, α-Bromacryloyl- oder α-Chloracryloylrest oder einen Rest der Formeln

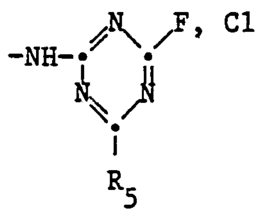

oder

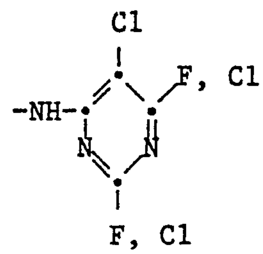

worin $R_5$ $C_{1-6}$-Alkoxy, $C_{1-6}$-Alkylmercapto oder ein Rest der Formel

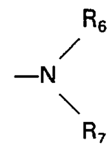

ist, wobei $R_6$ und $R_7$ unabhängig voneinander Wasserstoff, $C_{1-6}$-Alkyl oder gegebenenfalls substituiertes Phenyl oder Naphthyl bedeuten, oder einen Vinylsulfonyl-, β-Sulfatoäthylsulfonyl-, β-Acetoxyäthylsulfonyl-, β-Chloräthylsulfonyl oder β-(β'-Sulfatoäthylsulfonyl)-propionylaminomethyl-Rest bedeutet.

8. Verfahren gemäss Anspruch 3, dadurch gekennzeichnet, dass man Mischungen von zwei Anthrachinonfarbstoffen gemäss der in Anspruch 3 angegebenen Definition verwendet.

9. Verfahren gemäss Anspruch 5, dadurch gekennzeichnet, dass man eine Mischung aus zwei Anthrachinonfarbstoffen verwendet, worin eine Komponente einem Farbstoff der Formel (4) entspricht und die andere Komponente einem Farbstoff der Formel (4) oder (5) entspricht.

10. Verfahren gemäss Anspruch 8, dadurch gekennzeichnet, dass man eine Mischung verwendet, wobei eine Komponente einem Farbstoff der Formel

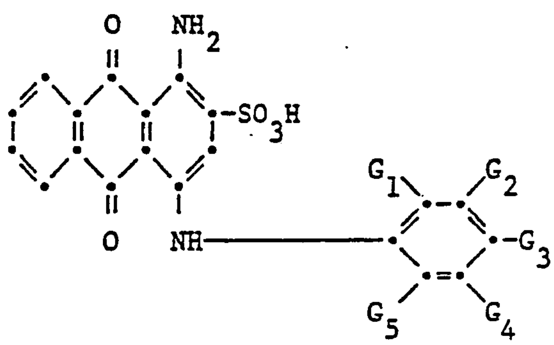

(1)

entspricht, worin $G_1$, $G_3$ und $G_5$ Methyl, $G_2$ Wasserstoff oder Chloracetylaminomethyl und $G_4$ Chloracetylaminomethyl ist, und die andere Komponente dem Farbstoff der Formel

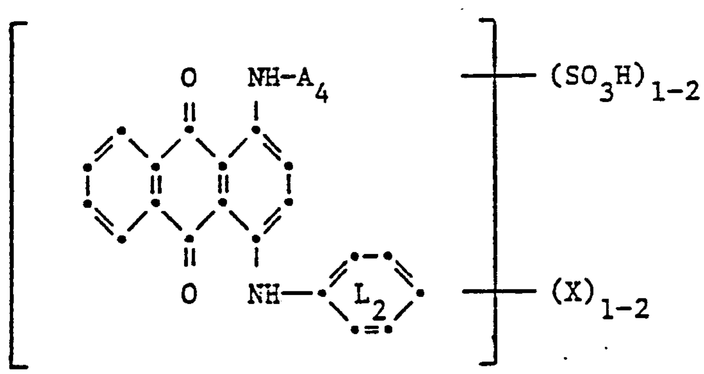

(5)

entspricht, worin $A_4$ Cyclohexyl, $L_2$ durch p-Methylphenoxy substituiert ist und X Chloracetylaminomethyl ist und der Farbstoff der Formel (5) nur eine Sulfogruppe enthält.

11. Verfahren gemäss Anspruch 4, dadurch gekennzeichnet, dass man eine Mischung verwendet, worin jede Einzelkomponente einem monosulfogruppenhaltigen Farbstoff der Formel (3) entspricht.

12. Verfahren gemäss einem der Ansprüche 1 und 3, dadurch gekennzeichnet, dass man synthetische Polyamid-Teppiche färbt.

13. Verfahren gemäss einem der Ansprüche 1 und 3, dadurch gekennzeichnet, dass man auf synthetisches Polyamid-6-Fasermaterial färbt.

14. Verfahren gemäss einem der Ansprüche 1 und 3, dadurch gekennzeichnet, dass man heiss foulardiert oder heiss aufsprüht.

15. Wässrige Färbeflotte, dadurch gekennzeichnet, dass sie Wasser, einen Farbstoff der Formel (1) oder (2) oder eine Mischung von Anthrachinonfarbstoffen mit ein oder zwei faserreaktiven Gruppen und ein oder zwei Sulfonsäuregruppen sowie gegebenenfalls weitere Zusätze enthält.

16. Das nach dem Verfahren gemäss Anspruch 1 oder Anspruch 3 gefärbte synthetische Polyamidfasermaterial.

17. Das unter Verwendung der Färbeflotte gemäss Anspruch 15 gefärbte synthetische Polyamidfasermaterial.

18. Die gemäss Anspruch 12 gefärbten Polyamid-Teppiche.

## Revendications

1. Procédé de préparation de teintures solides à l'ozone, sur des matières en fibres de polyamides, en bains aqueux, avec des colorants anthraquinoniques, caractérisé en ce qu'on teint en continu et en ce qu'on utilise un colorant anthraquinonique répondant à la formule

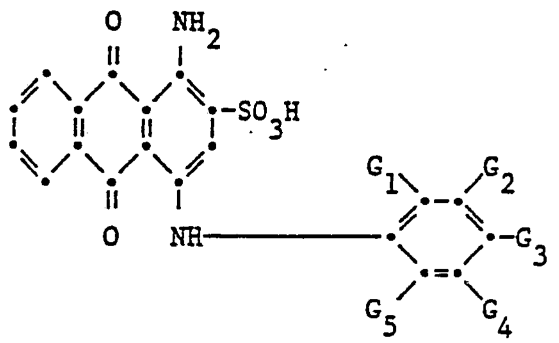

(1)

dans laquelle $G_1$, $G_3$ et $G_5$ sont des groupes méthyle, $G_4$ est un groupe α-chloro- ou α-bromoacryloylaminométhyle, α,β-dibromopropionylaminométhyle, β-(β'-sulfatoéthylsulfonyl)-propionylaminométhyle, α,β-dibromopropionylamino ou —CH(COOH)—NH—CO—CHBr—$CH_2Br$ et $G_2$ est un atome d'hydrogène ou un groupe sulfo ou —CH(COOH)—NH—CO—CHBr—$CH_2Br$, ou dans laquelle $G_1$, $G_2$, $G_3$ et $G_5$ sont des atomes d'hydrogène et $G_4$ est un groupe α,β-dibromopropionylamino, vinylsulfonyle, 2-méthoxy-4-fluoro-s-triazinylamino ou 2-éthylamino-4-fluoro-s-triazinylamino, ou dans laquelle $G_1$, $G_2$, $G_4$ et $G_5$ sont des atomes d'hydrogène et $G_3$ est un groupe α,β-dibromopropionylamino, 2,6-difluoro-5-chloropyrimidine-4-yl-amino ou 2-chloro-4-amino- ou 4-N,N-diméthylamino-s-triazinylamino, ou dans laquelle $G_1$ ou $G_2$ est un groupe sulfo, $G_3$ est un groupe N-méthyl-N-[3-(β-chloréthylsulfonylbenzoyl]-amino et $G_2$ ou $G_1$ et $G_4$ et $G_5$ sont des atomes d'hydrogène, ou un colorant anthraquinonique répondant à la formule

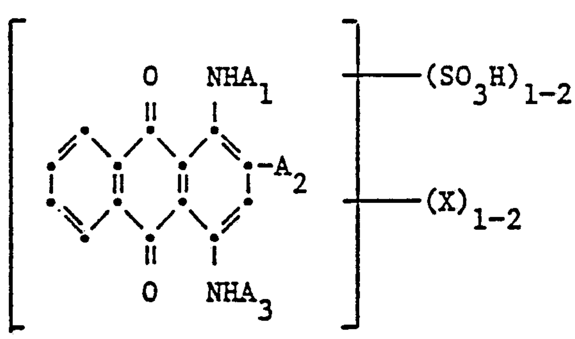

(2)

dans laquelle $A_2$ est un atome d'hydrogène et $A_1$ et $A_3$ désignent chacun, avec X, le radical 4-α-bromacryloylamino-3-sulfophényle ou le radical phényl-sec-butyle substitué, dans le cycle phényle, par un ou des groupes sulfo et un ou des groupes chloracétylaminométhyle.

2. Procédé selon la revendication 1, caractérisé en ce qu'on utilise un colorant répondant à la formule I,

dans laquelle $G_1$, $G_2$, $G_4$ et $G_5$ sont des atomes d'hydrogène et $G_3$ est un groupe α,β-dibromopropionylamino, ou dans laquelle $G_1$, $G_2$, $G_3$ et $G_5$ sont des atomes d'hydrogène, et $G_4$ est un groupe vinylsulfonyle, 2-méthoxy- ou 2-éthyl-amino-4-fluoro-s-triazinylamino, ou dans laquelle $G_1$, $G_3$ et $G_5$ sont des groupes méthyle, $G_2$ est un atome d'hydrogène et $G_4$ est un groupe α,β-dibromopropionylaminométhyle ou $—CH(COOH)—NH—CO—CHBr—CH_2Br$, ou dans laquelle $G_1$, $G_3$ et $G_5$ sont des groupes méthyle et $G_2$ et $G_4$ sont des groupes $—CH(COOH)—NH—CO—CHBr—CH_2Br$, ou dans laquelle $G_1$, $G_3$ et $G_5$ sont des groupes méthyle, $G_2$ est un groupe α,β-dibromopropionylamino et $G_4$ est un groupe sulfo.

3. Procédé de préparation de teintures solides à l'ozone sur des matières en fibres de polyamides, en bain aqueux, avec des mélanges de colorants anthraquinoniques, caractérisé en ce qu'on teint en continu et en ce qu'on utilise des mélanges de colorants anathraquinoniques ayanat un ou deux groupes reagissant avec les fibres et un ou deux groupes acide sulfonique.

4. Procédé selon la revendication 3, caractérisé en ce qu'on utilise un mélange dans lequel chacun des constituants individuels correspond à un colorant répondant à la formule

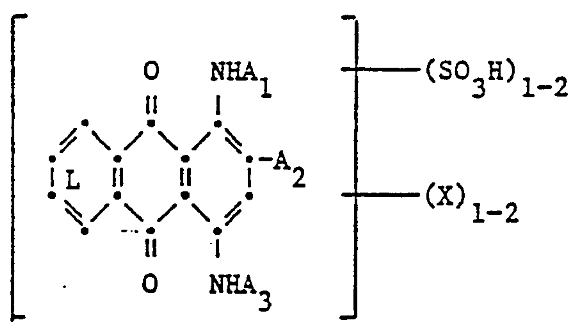

(3)

dans laquelle le cycle L peut être substitué par ou des groupe hydroxy, halogéno ou sulfo, $A_1$ désigne un atome d'hydrogène, un groupe alkyle en $C_1$ à $C_8$, cycloalkyle en $C_5$ à $C_7$, phényle ou phényl-alkyle en $C_1$ à $C_8$, $A_2$ désigne un atome d'hydrogène, un atome d'halogène ou un groupe acide sulfonique, $A_3$ désigne un groupe phényle ou phényl-alkyle en $C_1$ à $C_8$ éventuellement substitué par un ou des groupes alkyle en $C_1$ à $C_4$, alcoxy en $C_1$ à $C_4$, phénoxy, (alkyle en $C_1$ à $C_4$)-(phénoxy ou naphtoxy) et X est un radical réagissant avec les fibres, lié directement ou par l'intermédiaire d'un chaînon de pontage.

5. Procédés selon la revendication 4, caractérisé en ce qu'on utilise un mélange dans lequel chacun des constituants individuels correspond à un colorant répondant à la formule

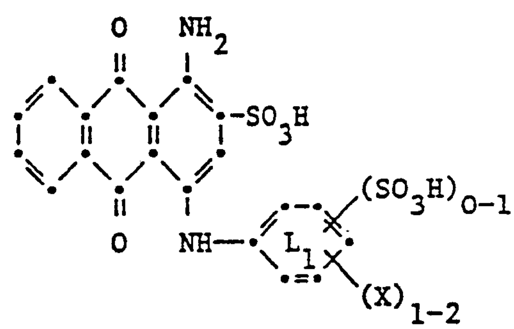

(4)

dans laquelle X a la signification indiquée dans la revendication 4 et le cycle phényle, $L_1$ est substitué le cas échéant une fois, deux fois, trois fois au quatre fois par un ou des groupes alkyle en $C_1$ à $C_4$, alcoxy en $C_1$ à $C_4$ ou phénoxy, ou à un colorant répondant à la formule

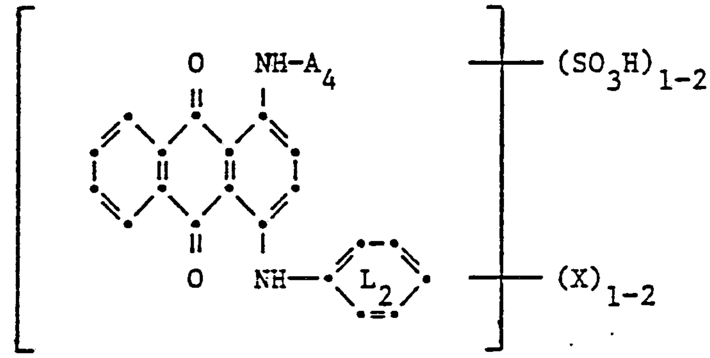

(5)

dans laquelle $A_4$ désigne un radical alkylke en $C_1$ à $C_6$ ou cycloalkyle en $C_5$ à $C_7$, X a la signification indiquée dans la revendication 4 et le cycle phényle $L_2$ est substitué le cas échéant une fois, deux fois ou trois fois par un ou des groupes alkyle en $C_1$ à $C_4$, alcoxy en $C_1$ à $C_4$, phénoxy ou (alkyle en $C_1$ à $C_4$)-(phénoxy), ou à un colorant répondant à la formule

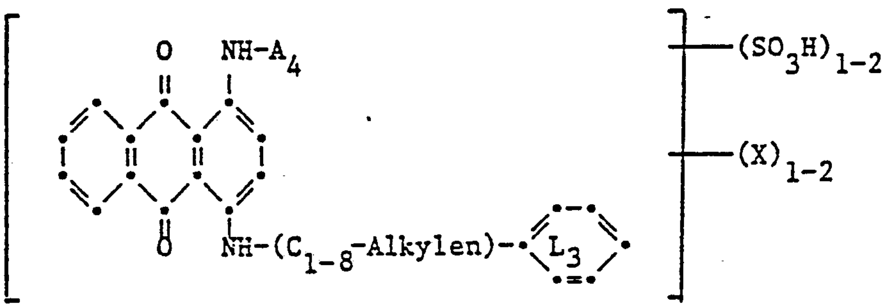

(6)

dans laquelle $A_4$ a la signification indiquée à propos de la formule (5), X a la signification indiquée dans la revendication 4 et le cycle phényle $L_3$ est substitué le cas échéant une fois ou deux fois par un ou des groupes alkyle en $C_1$ à $C_4$ ou alcoxy en $C_1$ à $C_4$, ou à un colorant répondant à la formule

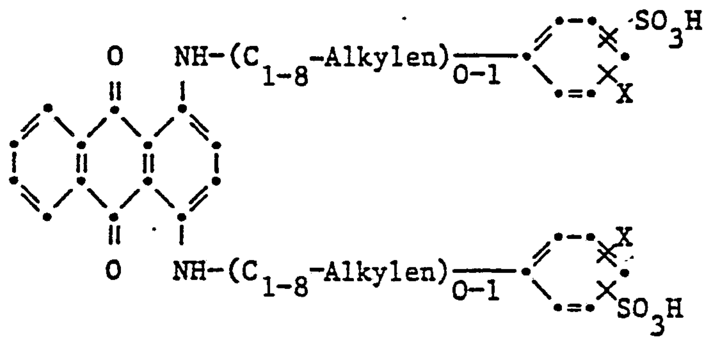

(7)

dans laquelle X a la signification indiquée dans la revendication 4.

6. Procédé selon l'une des revendications 4 et 5, caractérisée en ce qu'on utilise des colorants anthraquinones dans lesquels X est un radical réagissant avec des fibres, lié le cas échéant par l'intermédiaire d'un chaînon de pontage répondant à la formule

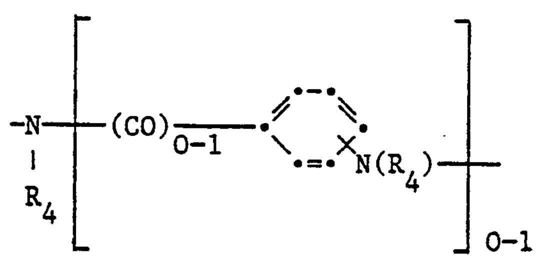

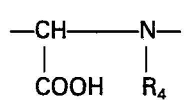 ou 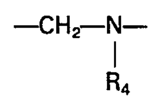

de la série aliphatique, aromatique ou hétérocyclique, et $R_4$ est un atome d'hydrogène ou un groupe alkyle en $C_1$ à $C_4$.

7. Procédé selon la revendication 6, caractérisé en ce qu'on utilise des colorantas anthraquinoniques dans lesquels X désigne un radical chloracétyle, bromacétyle, acryloyle, αβ-dichloropropionyle, α,β-dibromopropionyle, α-bromacryloyle, ou α-chloracryloyle, lié par l'intermédiaire d'un groupe —NH—,

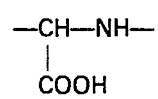

ou —$CH_2$—NH—, ou un radical répondant à l'une des formules

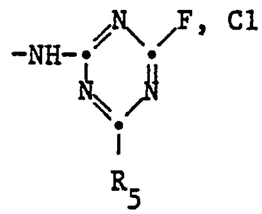 ou 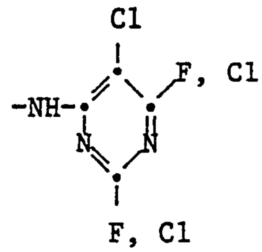

dans lesquelles $R_5$ désigne un groupe alcoxy en $C_1$ à $C_6$, (alkyle en $C_1$ à $C_6$)-mercapto ou un radical répondant à la formule, dans laquelle $R_6$ et $R_7$ désignent chacun indépendamment l'une de l'autre un atome d'hydrogène, un groupe alkyle en $C_1$ à $C_6$ ou un groupe phényle ou naphtyle substitué le cas échéant, ou un radical vinylsulfonyle, β-sulfatoéthylsulfonyle, β-acétoxyéthylsulfonyle, β-chloréthylsulfonyle ou β-(β'-sulfatoéthylsulfonyl)-propionylaminométhyle.

8. Procédé selon la revendication 3, caractérisé en ce qu'on utilise des mélanges des deux colorants anthraquinoniques conformes à la définition donnée dans la revendication 3.

9. Procédé selon la revendication 5, caractérisée en ce qu'on utilise un mélange de deux colorants anthraquinoniques, dans lequel un des constituants correspond à un colorant répondant à la formule (4) et l'autre constituant correspond à un colorant répondant à la formule (4) et l'autre constituant correspond à un colorant répondant à l'une des formules (4) ou (5).

10. Procédé selon la revendication 8, caractérisé en ce qu'on utilise en mélange dans lequel un des constituants correspond à un colorant répondant à la formule

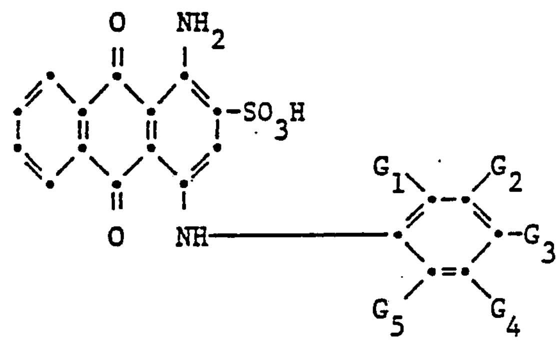

(1)

dans laquelle $G_1$, $G_3$ et $G_5$ désignent des groupes méthyle, $G_2$ est un atome d'hydrogène ou un groupe chloracétylaminométhyle et $G_4$ est un groupe chloracéthylaminométhyle, et l'autre constituant correspond à un colorant répondant à la formule

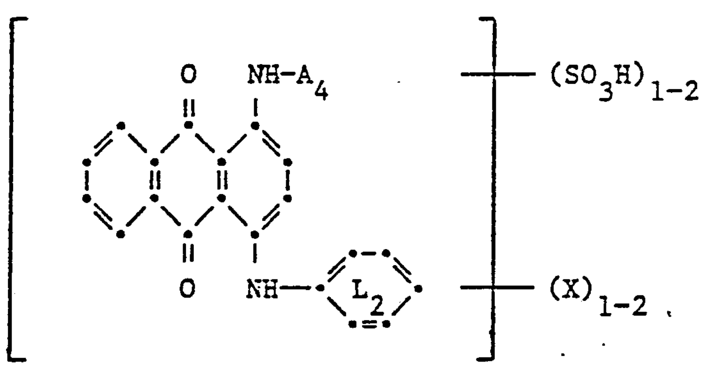

(5)

dans laquelle $A_4$ est un groupe cyclohexyle, $L_2$ est substitué par un groupe p-méthylphénoxy et X est un groupe chloracétylaminométhyle, et le colorant répondant à la formule (5) contient un seul groupe sulfo.

11. Procédé selon la revendication 4, caractérisé en ce qu'on utilise un mélange dans lequel chacun des constituants individuels correspond à un colorant répondant à la formule (3) et contenant un seul groupe sulfo.

12. Procédé selon l'une des revendications 1 et 3, caractérisé en ce que l'on teint des tapis en polyamide.

13. Procédé selon l'une des revendications 1 et 3, caractérisé en ce que l'on teint une matière fibreuse synthétique en polyamide 6.

14. Procédé selon l'une des revendications 1 et 3, caractérisé en ce que l'on foularde à chaud ou en ce que l'on pulvérise à chaud.

15. Bain de teinture aqueux, caractérisé en ce qu'il contient de l'ieu, un colorant répondant à la formule (1) ou (2) ou un mélange de colorants anthraquinoniques comportant un ou deux groupes réagissant avec les fibres et un ou deux groupes acide sulfonique, ainsi que, le cas échéant, d'autres additifs.

16. Matière fibreuse synthétique en polyamide, teinte par le procédé selon la revendication 1 ou 3.

17. Matière fibreuse synthétique en polyamide, teinte à l'aide d'un bain de teinture selon la revendication 15.

18. Tapis en polyamide teints conformément à la revendication 12.

**Claims**

1. A process for preparing ozone-fast dyeings on synthetic polyamide fibre material from aqueous liquor with anthraquinone dyes which comprises dyeing continuously and using an anthraquinone dye of the formula

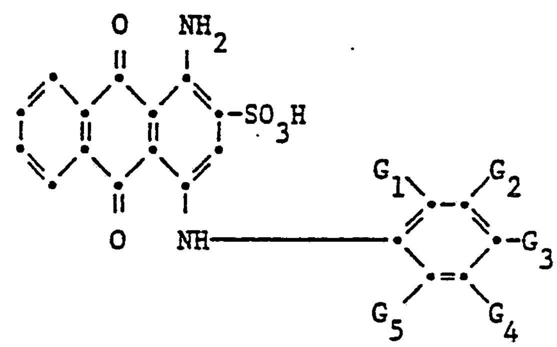

(1)

in which $G_1$, $G_3$ and $G_5$ are each methyl, $G_4$ is α-chloroacryloylaminomethyl, α-bromoacryloylaminomethyl, α,β-dibromopropionylaminomethyl, β-(β'-sulfatoethylsulfonyl)-propionylaminomethyl, α,β-dibromopropionylamino or —CH(COOH)—NH—CO—CHBr—$CH_2Br$ and $G_2$ is hydrogen, sulfo or —CH(COOH)—NH—CO—CHBr—$CH_2Br$, or in which $G_1$, $G_2$, $G_3$ and $G_5$ are each hydrogen and $G_4$ is α,β-dibromopropionylamino, vinylsulfonyl, 2-methoxy-4-fluoro-s-triazinylamino or 2-ethylamino-4-fluoro-s-triazinylamino, or in which $G_1$, $G_2$, $G_4$ and $G_5$ are each hydrogen and $G_3$ is α,β-dibromopropionylamino, 2,6-difluoro-5-chloropyrimidin-4-ylamino or 2-chloro-4-amino- or 4-N,N-dimethylamino-s-triazinylamino or in which $G_1$ or $G_2$ is sulfo, $G_3$ is N-methyl-N-[3-(β-chloroethylsulfonylbenzoyl]-amino and $G_2$ or $G_1$ and $G_4$ and $G_5$ are each hydrogen, or an anthraquinone dye of the formula

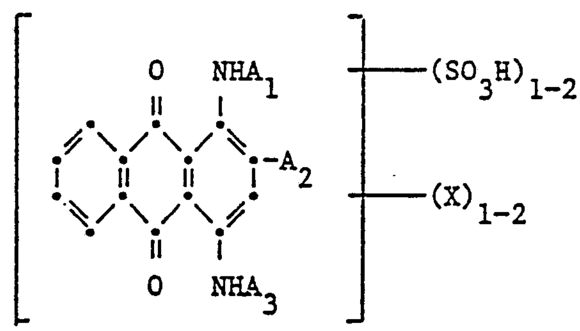

(2)

in which $A_2$ is hydrogen and $A_1$ and $A_3$ together with X are each the 4-α-bromoacryloylamino-3-sulfophenyl radical or the phenyl-sec-butyl radical substituted in the phenyl ring by sulfo and chloroacetylaminomethyl.

2. A process according to claim 1 which comprises using a dye of the formula (1) in which $G_1$, $G_2$, $G_4$ and $G_5$ are each hydrogen and $G_3$ is α,β-dibromopropionylamino, or in which $G_1$, $G_2$, $G_3$ and $G_5$ are each hydrogen and $G_4$ is vinylsulfonyl, 2-methoxy or 2-ethylamino-4-fluoro-s-triazinylamino, or in which $G_1$, $G_3$ and $G_5$ are each methyl, $G_2$ is hydrogen and $G_4$ is α,β-dibromopropionylaminomethyl or —CH(COOH)—NH—CO—CHBr—$CH_2Br$, or in which $G_1$, $G_3$ and $G_5$ are each methyl and $G_2$ and $G_4$ are —CH(COOH)—NH—CO—CHBr—$CH_2Br$, or in which $G_1$, $G_3$ and $G_5$ are each methyl, $G_2$ is α,β-dibromopropionylamino and $G_4$ is sulfo.

3. A process for preparing ozone-fast dyeings on synthetic polyamide fibre material from aqueous liquor with mixtures of anthraquinone dyes which comprises dyeing continuously and using mixtures of anthraquinone dyes having one or two fibre-reactive groups and one or two sulfo groups.

4. A process according to claim 3, wherein a mixture is used in which each individual component corresponds to a dye of the formula

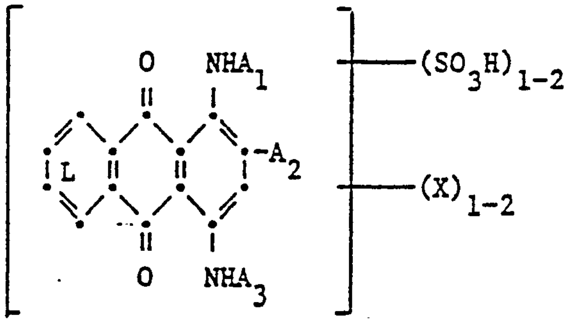

(3)

in which the ring L can be substituted by hydroxyl, halogen or sulfo, $A_1$ is hydrogen, $C_{1-8}$alkyl, $C_{5-7}$cycloalkyl, phenyl or phenyl-$C_{1-8}$alkyl, $A_2$ is hydrogen, halogen or a sulfo group, $A_3$ is unsubstituted or $C_{1-4}$alkyl-, $C_{1-4}$alkoxy-, phenoxy-, $C_{1-4}$alkylphenoxy- or naphthoxy-substituted phenyl or phenyl-$C_{1-8}$alkyl, and X is a fibre-reactive radical which is bonded either directly or via a bridge member.

5. A process according to claim 4, wherein a mixture is used in which each individual component corresponds to a dye of the formula

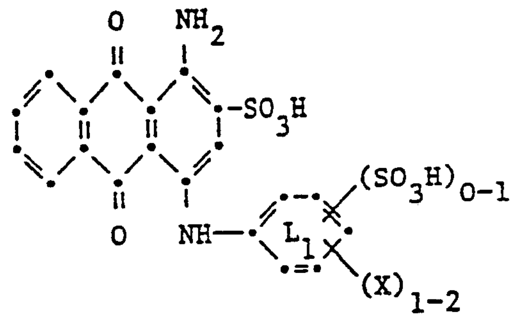

(4)

in which X is as defined in claim 4 and the phenyl ring $L_1$ can be monosubstituted, disubstituted, trisubstituted or tetrasubstituted by $C_{1-4}$alkyl, $C_{1-4}$alkoxy or phenoxy, or to a dye of the formula

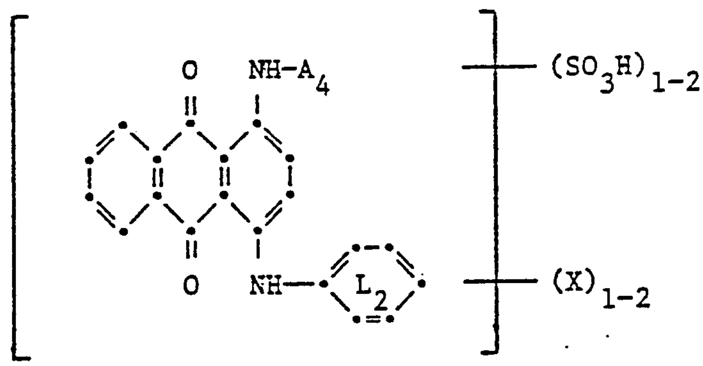

(5)

in which $A_4$ is a $C_{1-6}$alkyl or $C_{5-7}$cycloalkyl radical, X is as defined in claim 4 and the phenyl ring $L_2$ can be monosubstituted, disubstituted or trisubstituted by $C_{1-4}$alkyl, $C_{1-4}$alkoxy, phenoxy or $C_{1-4}$alkylphenoxy, or to a dye of the formula

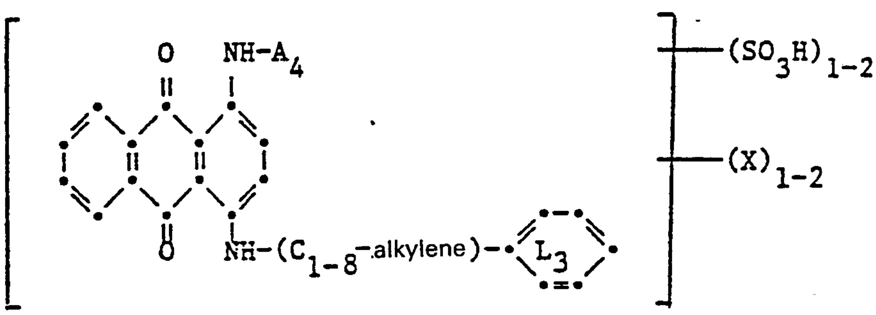

(6)

in which $A_4$ is as defined in formula (5), X is as defined in claim 4 and the phenyl ring $L_3$ can be monosubstituted or disubstituted by $C_{1-4}$alkyl or $C_{1-4}$alkoxy, or to a dye of the formula

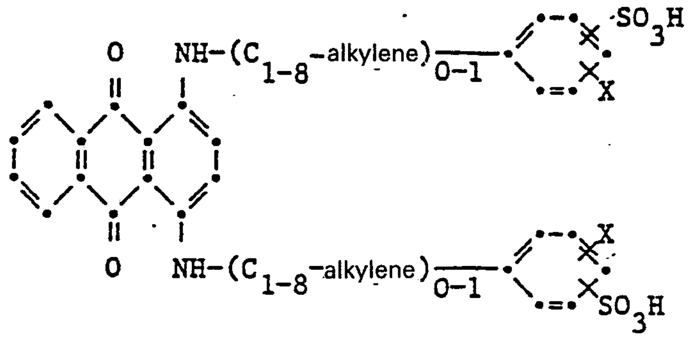

(7)

in which X is as defined in claim 4.

6. A process according to either of claims 4 and 5, wherein use is made of anthraquinone dyes in which X is a fibre-reactive radical of the aliphatic, aromatic or heterocyclic series which can be bonded via a bridge member of the formula

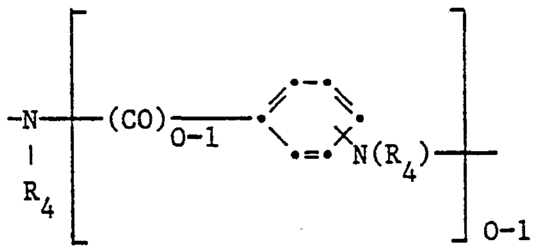

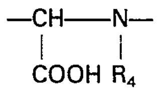 or 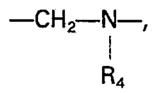,

and $R_4$ is hydrogen or $C_{1-4}$alkyl.

7. A process according to claim 6, wherein use is made of anthraquinone dyes in which X is a chloroacetyl, bromoacetyl, acryloyl, α,β-dichloropropionyl, α,β-dibromopropionyl, α-bromoacryloyl or α-chloroacryloyl radical which is bonded via —NH—,

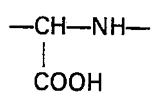

or $—CH_2—NH—$ or is a radical of the formulae

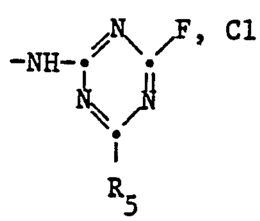

or

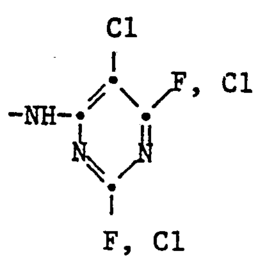

in which $R_5$ is $C_{1-6}$alkoxy, $C_{1-6}$alkylmercapto or a radical of the formula

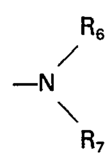

where $R_6$ and $R_7$, independently of each other, are each hydrogen, $C_{1-6}$alkyl or substituted or unsubstituted phenyl or naphthyl, or is a vinylsulfonyl, β-sulfatoethylsulfonyl, β-acetoxyethylsulfonyl, β-chloroethylsulfonyl or β-(β'-sulfatoethylsulfonyl)propionylaminomethyl radical.

8. A process according to claim 3, wherein mixtures of two anthraquinone dyes as defined in claim 3 are used.

9. A process according to claim 5, wherein a mixture of two anthraquinone dyes is used in which one component corresponds to a dye of the formula (4) and the other component corresponds to a dye of the formula (4) or (5).

10. A process according to claim 8, wherein a mixture is used where one component corresponds to a dye of the formula

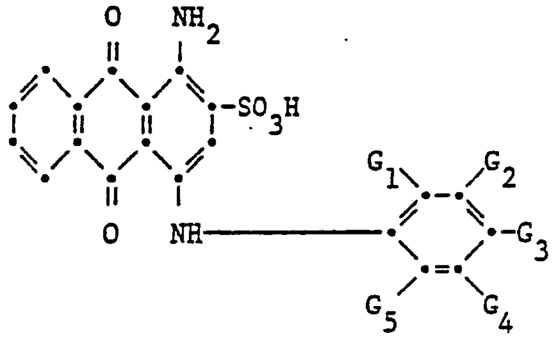

(1)

in which $G_1$, $G_3$ and $G_2$ are each methyl, $G_2$ is hydrogen or chloroacetylaminomethyl and $G_4$ is chloroacetylaminomethyl, and the other component corresponds to the dye of the formula

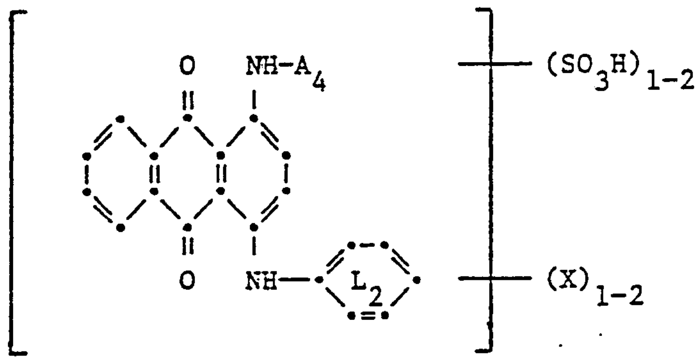

(5)

in which $A_4$ is cyclohexyl, $L_2$ is substituted by p-methylphenoxy and X is chloroacetylaminomethyl and the dye of the formula (5) contains only one sulfo group.

11. A process according to claim 4, wherein a mixture is used in which each individual component corresponds to a monosulfo-containing dye of the formula (3).

12. A process according to either of claims 1 and 3, wherein synthetic polyamide carpets are dyed.

13. A process according to either of claims 1 and 3, wherein nylon 6 fibre material is dyed.

14. A process according to either of claims 1 and 3, wherein the padding or sprayed-on liquor is hot.

15. An aqueous dyeing liquor which contains water, a dye of the formula (1) or (2) or a mixture of anthraquinone dyes having one or two fibre-reactive groups and one or two sulfo groups and can, if desired, also contain further additives.

16. The synthetic polyamide fibre material dyed in accordance with the process according to claim 1 or claim 3.

17. The synthetic polyamide fibre material dyed using the dyeing liquor according to claim 15.

18. The polyamide carpets dyed according to claim 12.